# EUROPÄISCHE PATENTSCHRIFT

(11) **EP 2 906 907 B1**
(45) Veröffentlichungstag und Bekanntmachung des Hinweises auf die Patenterteilung: **19.12.2018**
(21) Anmeldenummer: 13805237.8
(22) Anmeldetag: 10.10.2013
(51) Int. Cl.: G01S 3/782, G01S 7/497, G01C 15/00

(54) **LICHTSTRAHLEMPFÄNGER ZUM EMPFANG VON UNMODULIERTEN UND MODULIERTEN LICHTSTRAHLEN**
LIGHT DETECTOR FOR THE RECEPTION OF MODULATED AND UNMODULATED LIGHT BEAMS
RÉCEPTEUR DE RAYONS LUMINEUX POUR LA RÉCEPTION DE RAYONS LUMINEUX NON MODULÉS ET MODULÉS

(30) Priorität: 11.10.2012 DE 102012020246
(43) Veröffentlichungstag der Anmeldung: 19.08.2015
(73) Patentinhaber: AndroTec GmbH, 67714 Waldfischbach-Burgalben (DE)
(72) Erfinder: ESSLING, Mirko, 55606 Kellenbach (DE)
(74) Vertreter: Vossius & Partner Patentanwälte Rechtsanwälte mbB
(86) Internationale Anmeldenummer: PCT/DE2013/000585
(87) Internationale Veröffentlichungsnummer: WO 2014/056480

(56) Entgegenhaltungen:
- US-A- 4 674 870
- US-A1- 2001 013 929
- US-A1- 2010 128 247
- US-A1- 2011 221 487
- US-B1- 7 323 673

## Beschreibung

Die vorliegende Erfindung betrifft das oberbegrifflich Beanspruchte und befasst sich somit mit dem Empfang von Lichtstrahlen bei Vermessungen.

Die Vermessung mit Lichtstrahlen ist bekannt. So ist etwa aus der DE 10 006 493 A1 entsprechend der US 2001/013929 A1 ein Verfahren zur optoelektronischen Entfernungsmessung bekannt.

Wo Lichtstrahlen zur Vermessung eingesetzt werden, sind Lichtstrahlempfänger nötig. Ein typischer Einsatzbereich sind beispielsweise der Empfang von Licht aus den auf Baustellen und dergleichen verwendeten Rotations- und Linienlasern. Mit diesen wird Laserlicht abgestrahlt, beispielsweise als ein rotierender oder anders bewegter, im Querschnitt punktförmiger Strahl, als Laserfächer, der statisch oder bewegt sein kann, oder als Laserebene, die mittels Kegelspiegeln aufgefächerte sein kann. Um diese Strahlung auch in großer Entfernung und unter ungünstigen Bedingungen noch zur Vermessung verwenden zu können, bedarf es spezieller Lichtstrahlempfänger.

Lichtstrahlempfänger werden oft als sogenannte Handeinpfänger ausgeführt, manchmal auch als Maschinenempfällger zur Anbringung an die Arme oder Schilde von Baumaschinen zur Fernanzeige oder der automatischen Steuerung der Lage von Bearbeitungswerkzeugen. Die vorliegend beschriebenen Lichtstrahlempfänger lassen sich so verwenden.

Mit bei der Vermessung verwendeten Lichtstrahlempfangem können unterschiedliche Messaufgaben zu bewältigen sein.

Dies führt zu unterschiedlichen Anforderungen an die Laserlicbtempfänger, Wenn etwa Laserfächer oder Laserebenen Verwendung finden, wird das Laserlicht typischerweise moduliert. Demodulation am Empfänger erlaubt dann, Messungen auch bei größerem Abstand zur Laserquelle und damit stark abnehmender Signalintensität trotz Störeinflüssen wie Sonnenlicht, Hintergrundrauschen usw. vorzunehmen.

Wenn nun in einem Rotationslaser beispielsweise ein punktförmiger Laserstrahl um eine exakt senkrecht stehende Drehachse rotiert, so können mit geeigneten Lichtstrahleropfängern Höhen, d.h. präziser Abstände zu einer Laserebene, exakt dazu gemessen werden. Dazu werden im Lichtstrahlempfänger z.B mehrere Detektoren gemeinsam eingesetzt, aus deren Signalstärken bei Laserstrahlempfang eine Höhe relativ zu der durch den umlaufenden Laserstrahl definierten Bezugsebene weitgehend unabhängig von der Entfernung zum Laser bestimmt werden kann.

Die dafür verwendeten Detektorelemente sind üblicherweise als quasilineare Detektorzeilen, wie sie z.B. in der US 5,471,049 gezeigt sind, als Lichtleiter-basierter PSD, wie sie in der US 7,110,092 offenbart sind, oder als Mehrfachanordnung von vielen gleichen, aber über die Höhe unterschiedlich in der Empfindlichkeit elektronisch gewichteten Einzeldetektorelementen, vergleiche US 6,873,413, beziehungsweise im einfachsten Falle als zwei übereinander angeordnete gleichgroße photoelektrische Elemente vorgesehen.

Bei Verwendung geeigneter Auswerteschaltungen sind die dort beschriebenen photoelektrischen Detektoren alle mehr oder weniger für den höhenauflösenden bzw. ortsauflösenden Laserem-pfang geeignet. Auf die entsprechende Offenbarung wird daher für Zwecke der vorliegenden Erfindung hingewiesen.

Um eine stabile, möglichst genaue und störfeste Messung mit großen Reichweiten zu gewährleisten wurden nun im Stand der Technik Lichtstrahlempfänger für entweder den Empfang von unmodulierten, rotierenden Laserstrahlen oder den Empfang von modulierten, statischen Laserfächern ausgelegt. Beide Betriebsarten decken gemeinsam die überwiegende Mehrzahl an notwendigen Lichtstrahlempfängern zu Vermessungszwecken für die am Markt üblichen Rotations- oder Linienlaser ab. Derlei jeweils spezialisierte Geräte waren aber nicht verwendbar für die jeweils andere Betriebsart; demgemäß sind keine Kombinationsgeräte bekannt, die beide Betriebsarten mit vergleichbarer Leistung beherrschen wie hochwertige Lichstrahlempfanger, die auf eine einzige Betriebsart optimiert sind.

Zudem sind bisherige Lichtstrahlempfänger für den Empfang modulierter Lichtstrahlen auch lediglich für einen engen Modulations-Frequenzbereich der Laserlichtquellen-Modulation ausgelegt, weil nur mit engen Detektionsbandbreiten der Signalverarbeitungsschaltkreise brauchbare Reichweiten erzielbar sind. Die Bandbreiten sehr selektiver Empfänger liegen hierbei bei unter 10Hz und die Trägerfrequenzen verschiedener Linienlaser verwendender Stationsmodelle typischerweise zwischen 4 und 12kHz. Da unterschiedliche Hersteller stark unterschiedliche Modulationsfrequenzen für ihre Laserlichtquellen gewählt haben, sind die zugehörigen Lichtstrahlenipfänger jeweils auch nur für Geräte eines Herstellers geeignet, wenn nicht zufällig andere Hersteller eine ganz ähnliche Modulationsfrequenz gewählt haben, die (gerade noch) ebenfalls im Toleranzbereich des Lichtstrahlempfängers liegen.

Preiswerte, breitbandigere Lichtstrahlempfänger erlauben zwar den Empfang eines breiteren Bereichs von Modulationsfrequen-zen und sind insoweit für mehrere Hersteller einsetzbar, erzielen aber gerade dadurch zwangsläufig bei gegebener Empfängerempfindlichkeit nur geringere Reichweiten.

Erschwerend kommt hinzu, dass mit dem Aufkommen von breitbandigeren Lichtstrahlempfängern für modulierte Lichtstrahlen die Hersteller der Linienlaser von einer Modulation mit einer hochgenauen, quarzstabilisierten Frequenz auf eine Modulation der Linienlaser mit preiswerten RC-Oszillatoren übergegangen sind. Diese sehr breit tolerierten RC-Oszillatoren driften aber bei schwankender Temperatur und Batteriespannung stark, so dass sie für schmalbandige und damit potenziell leistungsfähigere Empfanger nicht mehr verwendet werden können,

Um solche Probleme zu vermeiden, wurden in US 4,756,617, sowie US 7,012,237 und US 7,323,673 bereits Lichtstrahlempfanget mit PLLs und synchronen Detektoren bzw. Zwischenfrequenzstufen (Superhet) vorgeschlagen. Letztere erlauben zwar die relativ einfache Verstellung der Mittenfrequenz, sind aber nicht in der Lage, eine driftende Modulationsfrequenz zwischen Empfangspausen zu erfassen und müssen deshalb zum erneuten Fangen der Mittenfrequenz einen Suchlauf durchführen, der ihre Reaktionszeit so deutlich erniedrigt, dass kaum ein tragbarer Kompromiss zwischen Suchbandbreite und Reichweite gefunden werden kann.

Die Lichtstrahlempfänger gemäß US 4,756,617 und US 7,012,237, die somit zwar potenziell größere Fangbereiche ergeben, um eine Drift oder Toleranz der Modulationsfrequenz abzufangen, ohne die Reaktionszeit auf einen Lichtstrahlempfang merklich zu verkürzen, besitzen zudem einen kleinen Dynamikbereich, der durch die native Auflösung der hinter den synchronen Detektor geschalteten Analog-/Digitalwandler und potenzielle DC-Offsets des synchronen Detektors begrenzt wird. Um den Dynamikbereich dennoch zu erhöhen, ist eine Anpassung der Signalverstärkung vor dem Detektor an die jeweilig empfangene Signalamplitude nötig. Ein weiterer Nachteil liegt in der Tatsache begründet, dass der vorgeschlagene synchrone analoge Peakdetektor nur bei exaktem Treffen der Mittenfrequenz des Fangbereichs der PLL optimal detektiert, aber weiter von dieser entfernt den empfangenen Träger durch Phasenverschiebungen der gefangenen Frequenz nicht mehr exakt arbeitet.

Die Mittenfrequenz des Fangbereichs solcher Konstruktionen muss daher in der Produktion durch Bauteilabgleich eingegrenzt werden, wenn der Fangbereich zum Erzielen einer hohen Reichweite des Lichtstrahlempfangs schmal gehalten werden soll. Am Ende entsteht damit ein Produkt, das erheblich teurer ist als gewöhnliche Rotationslaserempfänger, wieder nur auf eine spezifische Frequenz ausgelegt ist und kaum mehr als einen Fangbereich von +- 10 % um die fest eingestellte Mittenfrequenz erlaubt.

Typische Lichtstrahlempfänger für rotierende, unmodulierte Lichtstrahlen unterscheiden sich von den zuvor beschriebenen Ansätzen für modulierte Lichtstrahlen z.T. erheblich, da die Signale der Detektorelemente bei rotierenden, unmodulierten Lichtstrahlen sowohl erheblich höhere Bandbreiten (ab 250 kHz) als auch erheblich höhere Signalamplituden aufweisen. Hierzu ist anzumerken, dass von Zentralstationen, d.h. Lichtsendern, die rotierende Lichtstrahlen aussenden, am periodisch vom Lichtstrahl überstrichenen Lichtempfänger typischerweise in größerer Entfernung ein Strahl empfangen wird, der zwar evtl. beugungsbedingt etwas aufgeweitet ist, aber dennoch eine vergleichsweise hohe Leistung pro Fläche Strahlquerschnitt aufweist. Diese hohe Leistung pro Fläche wird entsprechend der Rotation wiederholt den Laserempfänger erreichen; da die Rotation im Regelfall durch eine Rotation von mechanischen Komponenten erzielt wird, sind die Repetitionsraten vergleichsweise niedrig. Im Unterschied dazu senden Zentralstationen, die "modulierte" Lichtstrahlen aussenden, diese als Fächer oder breit gezogene Striche aus. Die gesamte Fächerkante bzw. der gesamte breit gezogene Strich wird dabei simultan beleuchtet. Damit verteilt sich die gesamte Laserleistung des Lichtsenders auf eine recht große Fläche und die Leistung pro Fläche ist entsprechend gering. Die Modulation wird dagegen typisch nicht mechanisch bewirkt, sondern durch Modulation der Laserstromquelle. Dies ist, selbst dann, wenn eine 100%-Modulation zwischen "Laser aus" und "Laser auf Maximalleistung" verwendet wird, mit hoher Frequenz möglich. Lichtempfänger, die sowohl von einer Rotationsstation gepulst empfangene Lichtstrahlen nachweisen sollen, als auch hochfrequent moduliertes Licht aus modulierte Lichtstrahlen aussendenden Zentralstationen zu Messzwecken verwenden sollen, müssen also in der Lage sein, in zwei Messregimen gute Ergebnisse zu liefern, nämlich zum einen im Regime hoher, aber mit geringer Frequenz gepulst empfangener Lichtleistung und zum anderen im Regime der Lichtstrahlen, die mit hoher Frequenz moduliert sind, aber eine nur geringe Leistungsdichte aufweisen. Erwähnt sei im Übrigen, dass einsichtigerweise auch rotierend ausgestrahlte Lichtstrahlen hochfrequent, etwa durch

Variationen im Pumpstrom einer die Lichtstrahlen emittierenden Laserdiode, moduliert sein können. Auch bei derartigen Lichtsendern wird aber, aufgrund der nur geringen Strahlaufweitung, eine hohe Leistungsdichte zu verzeichnen sein und im übrigen eine Unterscheidung zwischen den vergleichsweise kurzen Zeiten, zu denen ein Lichtempfänger vom rotierenden Strahl überstrichen wird, und den Wartezeiten bis zum neuerlichen Eintreffen des Strahls erforderlich sein.

Im Stand der Technik sind Kombinationsempfänger für beide Betriebsarten damit nur zu realisieren, indem die analoge Signalverarbeitung doppelt ausgelegt oder die Reichweite und Leistungsfähigkeit limitiert wird.

Ein leistungsfähiger Kombinationsempfänger wäre daher wünschenswert. Daher ist es erstrebenswert, einen Empfänger für modulierte Lichtstrahlen bereitstellen zu können, der mit allenfalls geringen Anpassungen auch für gepulst empfangene, in der Regel zudem unmodulierte Lichtstrahlen einsetzbar ist.

Besonders wünschenswert wäre, wenn der Lichtstrahlempfänger manuell vom Benutzer oder automatisch, insbesondere beim Einschalten, vom Gerät zwischen den Betriebsmodi umschaltbar wäre.

Wünschenswert wäre auch, wenn der Lichtstrahlempfänger in beiden Modi eine sehr hohe Leistungsfähigkeit aufweisen würde, d. h. insbesondere große Störsicherheit und große Reichweite.

Wünschenswert wäre auch, wenn der Lichtstrahlempfänger Hardware für beide Betriebsarten besitzt, aber mittels Software auf nur eine der beiden Betriebsarten beschränkt werden kann, ohne gegenüber anderen Ansätzen des Standes der Technik, die mit ihm am Markt konkurrieren, Kostennachteile zu besitzen.

Wünschenswert wäre auch, wenn der Lichtstrahlempfänger im Betriebsmodus für modulierte Lichtquellen die Möglichkeit des Anlernens der Modulationsfrequenz besäße, und zwar zumindest auf Befehl des Benutzers und/oder automatisch, wobei dies bevorzugt in einem weiten Frequenzbereich erfolgen sollte.

Wünschenswert wäre auch, wenn ein teurer Abgleich von Bauteilwerten in der Produktion überflüssig wäre.

Wünschenswert wäre auch, wenn der Lichtstrahlempfänger am Rand des Fang- bzw. Suchbereichs von einer Verminderung der detektierten Amplitude unbeeinträchtigt wäre.

Daher ist es erstrebenswert, einen Empfänger für modulierte Lichtstrahlen bereitstellen zu können, der mit allenfalls geringen Anpassungen auch für unmodulierte, aber gepulst empfangene Lichtstrahlen einsetzbar ist.

Wünschenswert wäre auch, ohne Zwang zur Einhaltung von engen Toleranzen die Empfindlichkeit eines Lichtempfängers auch dann zu verbessern, wenn eine nur schwache Digitaldatenverarbeitungsleistung zur Verfügung steht.

Die Aufgabe der vorliegenden Erfindung besteht darin, einen Lichtstrahlempfänger anzugeben, der zumindest einige der vorgenannten Wünsche zumindest partiell erfüllt.

Die Lösung dieser Aufgabe wird in unabhängiger Form beansprucht. Bevorzugte Ausführungsformen finden sich in den Unteransprüchen.

Vorgeschlagen wird somit eine Empfangseinheit für lichtbasierte Messungen wie Vermessungen auf Baustellen, Lichtschranken, Entfernung- oder Ausrichtemessungen usw., mit einem Analog-Digital-Wandler zur getakteten Analog-Zu-Digitalwandlung von Lichtdetektionssignalen und einem Taktungsmittel zur Taktung des des Datenstromes vom Analog-Digital-Wandler, wobei vorgesehen ist, dass für den Empfang von modulierten Lichtsignalen das Taktungsmittel eine phasenstarre Schleifen-Anordnung (PLL, phase locked loop) mit einem Eingang für entsprechend der Lichtsignalmodulation modulierte Lichtdetektionssignale und mit einem Ausgang zur Ausgabe eines Frequenzvieifachen der detektierten Modulationsfrequenz für die Taktung des Datenstromes des Analog-Digital-Wandlers aufweist.

Die Taktung des Datenstromes des Analog-Digital-Wandlers kann auf unterschiedliche Arten bewirkt werden. Zum einen ist möglich, die Taktung des Analog-Digital-Wandlers selbst zu verändern. Je nachdem, wie hoch die Modulationsfrequenz des empfangenen Lichtes (im Regime mit geringer Leistungsdichte, aber höherer Modulationsfrequenz) ist, wird also die Frequenz, mit welcher der Analog-Digital-Wandler wandelt, veränderlich sein. Eine weitere Möglichkeit besteht darin, den Analog-Digital-Wandler dauerhaft mit hoher Wandlerfrequenz Analogsignale in Digitaldaten wandeln zu lassen und dann aus dem so erzeugten Datenstrom immer nur jene Daten zu verwenden, für welche dies gemäß der unter Rückgriff auf die phasenstarre Schleife bestimmten Taktung geboten ist. Auch dies taktet den Datenstrom. Es wird dann also unter Verwendung der Taktung ermittelt, welche Daten aus dem kontinuierlichen (höherfrequenten, aber mit der Modulation des Lichtstrahls nicht synchronen) Datenstrom verwendet werden sollen.

Die entsprechend der Lichtsignalmodulation modulierten Lichtdetektionssignale können mit einem oder mehreren Detektoren erfasst werden. So ist beispielsweise dort, wo das Signalverhältnis eines oberen und eines unteren Lichtdetektors, mit denen gemeinsam Licht empfangen wird, bestimmt wird, um auf eine Höhe zu schließen, eine Möglichkeit dadurch gegeben, dass die Summe beider Detektoren für die Bestimmung des Taktes an die phasenstarre Schleife gespeist wird. Die Signale können zudem konditioniert werden, das heißt z. B. verstärkt, impedanzangepasst, invertiert und/oder bandpassgefiltert wie erforderlich. Es ist beispielsweise möglich, einen Bandpassfilter zu verwenden, um das Modulationssignal auch aus größerem Untergrund heraus noch zu erfassen. Der Bandpassfilter kann gegebenenfalls mit unterschiedlichen Filterbreiten gebaut werden, um zunächst eine breitere Erfassung um eine Mittelfrequenz zu ermöglichen und/oder um sich auf unterschiedliche Sigiialrauschverhältnisse anzupassen.

Mit dieser Anordnung wird der leistungsstarke Empfang von modulierten Signalen unabhängig von der exakten Modulationsfrequenz möglich, ohne dass ein teurer Bauteileabgleich erforderlich ist, und zwar mit einer Schaltungsanordnung, von welcher erhebliche Teile für den Empfang rotierender und damit an-aus-gepulst empfangener Lasersignale verwendbar sind.

Indem die Wandlertaktung bzw, die Datennahme aus dem Datenstrom des Analog-Digitalwandlers an die Modulationsfrequenz auf einfache Weise angepasst wird, wird ein teurer Abgleich in der Fabrik überflüssig. Die Anpassung der Taktung erlaubt zudem ein einfaches Mitteln der digital gewandelten Signale und damit die Erzielung eines sehr guten Signal-Rausch-Verhältnisses. Dabei ist von Vorteil, dass die Synchonisierung des Startpunkts des Ablegens der Wellenform im Speicher mit der Modulationsfrequenz durch den erfindungsgemäßen Rückgriff auf ein Taktungsmittel mit phasenstarrer Schleife die Datenmittelung erleichtert.

Besonders bevorzugt ist es daher, wenn bei einem Lichtstrahlempfänger der Erfindung zur Analyse eines Lichtstrahlem-pfangs mit einer Lichtstrahldetektoranordnung, die aus mindestens einem Lichtstrahldetektorelement besteht und einer Auswerteeinheit, bei der mindestens ein Analog-/Digitalwand-ler vorgesehen ist, auch vorgesehen ist, dass der Analog-/Di-gitalwandler mit einem Ausgangstakt einer PLL getaktet ist, deren Frequenz ein Vielfaches einer in den Fangbereich der PLL fallenden Trägerfrequenz eines modulierten Lichtstrahlempfangs ist und dass der am Ausgang des Analog-/Digitalwand-lers entstehende digitale Datenstrom zwecks Bestimmung einer Amplitude digital detektiert wird. Die Amplitudenmessung wird hier besonders präzise, trotz Verwendung billiger Bauelemente. Bevorzugt ist auch ein Lichtstrahlempfänger, bei welchem die Mittenfrequenz des Fangbereichs der PLL über ein Steuersignal eingestellt werden kann, insbesondere von der oder einer Auswerteeinheit.

So ist es insbesondere möglich, die Modulationsfrequenz nahe des Senders zumindest grob aufzunehmen, also dort, wo das Signal-Rausch-Verhältnis gut brauchbar ist, und dann die dort erfasste Mittenfrequenz für weitere Messungen in größeren Entfernungen zu verwenden. Es ist dazu insbesondere möglich, die Frequenz zu messen. Die Modulationsfrequenz kann insbesondere mittels eines Suchlaufes erfasst werden, bei dem geprüft wird, bei welcher Frequenz die phasenstarre Schleife einlockt.

Dabei am Sender noch auftretende Driften können durch entsprechend breite Wahl von Bandpassfiltern, Fangbereichen usw. ohne weiteres und kostengünstig kompensiert werden. Wenn der Lichtstrahlempfänger, insbesondere handgehaltener Lichtstrahlempfänger, der Erfindung mit wechselnden Zentralstationen verwendet werden soll, die unterschiedliche Modulationsfrequenzen besitzen, so kann eine Speicherung der einer jeweiligen Zentralstation zugeordneten Mittenfrequenz erfolgen. Es kann dann beispielsweise im Betrieb sukzessive der Versuch unternommen werden, mit bestimmten, vorab erfassten Mittenfrequenzen zu arbeiten oder es kann eine von mehreren bereits gespeicherten Frequenzen benutzergesteuert herangezogen werden, So ist insbesondere die Messung der Frequenz möglich, bei welcher ein Einlocken der phasenstarren Schleife erfolgt. Es sei erwähnt, dass dies später hilfreich sein kann, um eine neuerliche Aufsynchronisation auf eine bereits zuvor erfasste Zentralstation zu erleichtern, insbesondere dort, wo simultan mehrere unterschiedliche und sich per se evtl. störende Zentralstationen betrieben werden.

Damit wird ein bevorzugter Lichtstrahlempfänger, der im Betriebsmodus für modulierte Lichtquellen die Möglichkeit des Anlernens der Modulationsfrequenz besitzt, ermöglicht, wobei das Anlernen sowohl auf Befehl des Benutzers als auch automatisch erfolgen kann, bevorzugt in einem recht weiten Frequenzbereich. Die Verstellung der Mittenfrequenz kann insbesondere auch gesteuert durch Software erfolgen. Dass andere Anlemmöglichkeiten bestehen, sei erwähnt.

Es ist möglich und bevorzugt, dass ein Lichtstrahlempfänger gemäß der vorliegenden Erfindung so ausgebildet ist, dass in einer Auswerteeinheit ein Timer mit einem Ausgang zur Pulsweitenmodulation vorgesehen ist, der über den Ausgangstakt der PLL synchronisiert ist. Die Mittenfrequenz des Fangbereichs der PLL kann durch das pulsweitenmodulierte Ausgangssignal des Timers gesteuert sein. Dies ist bevorzugt. Es sei im Übrigen erwähnt, dass es möglich ist, die aktuelle Frequenz, auf die sich die phasenstarre Schleife einlockt, zu erfassen und dann die Mittenfrequenz nachzuführen. Dies ist besonders vorteilhaft bei stärkerem Driften der Lichtsendermodulation.

Es versteht sich, dass der Lichtstrahlempfänger der vorliegenden Erfindung nicht nur für den Empfang eines modulierten Lichtstrahls, sondern auch für nichtmodulierte, insbesondere rotierend bewegte Lichtstrahlen verwendbar ist, ohne dass signifikante Änderungen an der Beschaltung erforderlich wären.

Der bevorzugte Lichtstrahlempfänger der vorliegenden Erfindung wird somit ein Kombinationsgerät für modulierte Lichtsignale, insbesondere modulierte Lichtstrahlen und/oder
- fächer sein und gleichzeitig auch für gepulst empfangene, nichtmodulierte Lichtstrahlen. Der Lichtstrahlempfänger der vorliegenden Erfindung wird bevorzugt eine Umschaltung zwischen den zwei Betriebsmodi - "modulierte" und "nichmodulierte" - Lichtstrahlen bzw. Lichtsignale aufweisen. Bevorzugt wird der Lichtstrahlempfänger für das Anlernen der Mittenfrequenz des Fangbereichs und die zunächst temporäre Speicherung einer angelernten Mittenfrequenz ausgebildet sein und/oder für die Ausführung eines Suchlaufs.

Die Erfindung wird im Folgenden nur beispielhaft anhand der Zeichnungen beschrieben. In diesen ist dargestellt durch:
- Fig. 1: ein Handempfänger der vorliegenden Erfindung;
- Fig. 2: eine vorbekannte Schaltungsanordnung für einen Handempfänger nach Fig. 1;
- Fig. 3: die Anordnung von Fig. 2 mit der erfindungsgemäßen Ergänzung einer den Analog-Digital-Wandlertakt beeinflussenden phasenstarren Schleife.

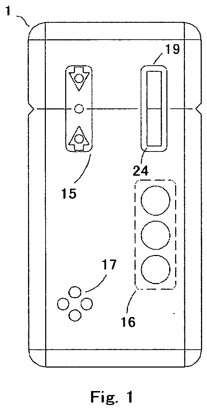

Nach Fig. 1 umfasst ein allgemein mit 1 bezeichneter Handempfänger 1 zum Empfang von gepulsten und modulierten Lichtstrahlen zwei lichtempfindliche Detektorelemente, die bei 24 gezeigt sind, verschiedene Betätigungsknöpfe 16, einen Lautsprecher 17 sowie eine Anzeige 15 für die Anzeige einer aktuellen Höhe relativ zu einer Referenzhöhe. Dabei soll die Anzeige 15 so gesteuert werden, dass dann, wenn ein Lichtstrahl mittig auf das Feld 24 für die lichtempfindlichen Detektorelemente fällt, eine mittige LED "ON GRADE" gesteuert wird, d.h. durch Erregen der LED angezeigt wird, dass - innerhalb von Toleranzgrenzen- die korrekte Höhe vorliegt- und ansonsten Pfeile, die die Abweichung von der Referenzhöhe andeuten.

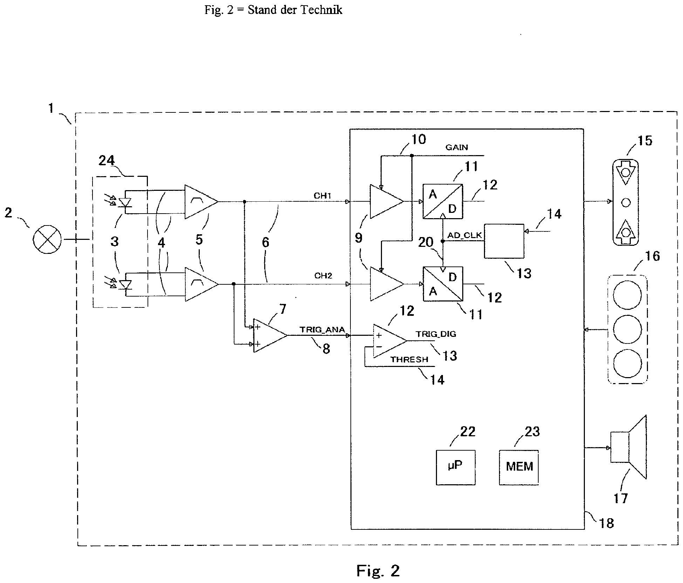

Um dies zu erreichen, weist der Lichtstrahlemptänger zwei lichtempfindliche Detektorelemente bei 24 auf, die bei Lichtstrahlempfang elektrische Ausgangssignale 4 erzeugen, die von jeweils zugeordneten Verstärkungs- und Signalkonditionierungsstufen 5 weiterverarbeitet werden. Die Ausgangssignale 6 der Verstärkungs- und Signalkonditionierungsstufen 5 werden einer Auswerteeinheit 18 zugeführt, vgl. Fig. 2. Der in Fig. 2 dargestellte Lichtstrahlempfänger dient im Stand der Technik nur dem Empfang rotierender Lichtstrahlen, das heißt gepulste Lichtstrahlen; für Zwecke der Erfindung wird eine An/Aus-Pulsung durch Strahlrotation nicht als Modulation verstanden, um eine leichtere Erklärung zu ermöglichen. Dies ändert aber nichts daran, dass auch die gepulst empfangenen Lichtstrahlen aus einer Licht moduliert abstrahlenden Zentralstation emittiert sein können und mit dem Gerät der Erfindung ungeachtet ihrer dann tatsächlich vorhandenen höherfrequenten Modulation nachweisbar sind.

In Fig. 2 sind nur jene Teile gezeigt, die für die Verwendung mit gepulst empfangenen, unmodulierten Strahlen erforderlich sind.

Ein Lichtstrahlempfänger für den Empfang von rotierenden Lichtstrahlen, der mit mindestens einem photoelektrischen Element ausgestattet ist, das zum Empfang von Lichtstrahlen bestimmt ist, und mindestens ein elektrisches Signal ausgibt, das nach Signalkonditionierung und -verstärkung auf einen A/D-Wandler geleitet wird, der einen Datenstrom erzeugt, auf den die Signalamplitude proportional zum Lichtstrahlempfang abgeleitet werden kann, um daraus auf eine bestimmte Eigenschaft des Strahl empfangs, z. B. dessen Lage auf dem Detektorelement, zu schließen, ist aus der US 7,394,427 bekannt.

Frühe Implementierungen dieses Ansatzes verwenden einen digitalen Trigger auf Basis der Werte des digitalen Datenstromes, um dessen Einlesen in einen Samplepuffer (Ringspeicher bzw. Ringpuffer) zu steuern. Der Nachteil dieses Ansatzes ist aber, dass während des Wartens auf einen Strahlempfang immer abgetastet werden muss, was zum Teil erhebliche Leistungsaufnahme erfordert, insbesondere wenn in langen Pausen auf einen Energiespaimodus gewechselt werden könnte, dann aber kein Kriterium zum Aufwachen bei Lichtstrahlempfang vorliegt.

Aus diesem Grund verwenden neuere Implementierungen einen Triggerimpuls, der mittels eines analogen Vergleichers erzeugt wird, der mit einem analogen Schwellwert, sowie einer weiter verstärkten und gefilterten Summe der elektrischen Signale für die A/D-Wandler gespeist wird. Damit können die A/D-Wandler und die Verstärkerstufen mit programmierbarer Verstärkung in langen Pausen abgeschaltet werden, aber die Auswerteschaltung kann jederzeit wieder durch einen Lichtstrahlempfang aufgeweckt werden, Die Auswerteschaltung (hier ein Mikrokontroller) enthält ohnehin meist analoge Komparatoren, so dass dadurch nur mit minimalen zusätzlichen Kosten zu rechnen ist.

Fig. 2 zeigt nun weiter, dass zur Verstärkung der Signale 6 in der Auswerteeinheit 18 zwei programmierbare Verstärker 9 vor den A/D-Wandlern 11 vorgesehen sind, deren Verstärkung 10 per Software einstellbar ist. Es sind dabei für die zwei lichtempfindlichen Detektorelemente zwei A/D-Wandler vorgesehen, so dass für jedes lichtempfindliche Detektorelement ein eigener A/D-Wandler vorgesehen ist, (Dass dies nicht zwingend ist, sei erwähnt. So könnte einem einzelnen A/D-Wandler ein Multiplexer vorgeschaltet sein, um nacheinander die Analogsignale aus unterschiedlichen Kanälen zu wandeln; die dargestellte Ausführungsform wird aber als leichter verständlich angesehen). Die - auch im Stand der Technik schon vorhandene - einstellbare Verstärkung 10 wird hier nur deswegen explizit gezeigt und erwähnt, weil die Auswerteeinheit vorzugsweise ein Mikrokontroller ist und dessen A/D-Wandler-Sektionen gewöhnlich mit Verstärkungsstufen mit einstellbarer Verstärkung ausgestattet sind und diese für die Erweiterung gemäß der besonders bevorzugten Variante der hier offenbarten Erfindung vorteilhaft sind. Für Rotationslaserempfang reicht es aber im Regelfall, die Verstärkungsstufen auf eine Verstärkung von 1 zu programmieren bzw. abzuschalten. In einem solchen Fall gelangen die Signale 9 direkt an die A/D-Wandler-Eingänge.

Um einen eintreffenden Lichtimpuls des rotierenden Laserstrahls erkennen zu können, ist nun ein summierender Verstärker und Signaikonditionierer 7 für die Signale 6 vorgesehen, der diese Signale weiter aufbereitet und ein analoges Triggersignal 8 einem in der Auswerteeinheit 18 enthaltenen Signalvergleicher zuführt. Der Signalvergleicher vergleicht das analoge Triggersignal 8 mit einer fest eingestellten oder per Software programmierbaren Schwellweitspannung 14. Das digitale Ergebnis dieses Vergleichs, das digitale Triggersignal 13, steht nun zur Steuerung des Abtastvorgangs und der Speicherung in den internen Speicher 23 der Auswerteeinheit zur Verfügung. Während der Mikroprozessor 22 und der interne Speicher 23 in der nur schematisch angedeuteten Auswerteeinheit 18 zwar aufgeführt, aber in der Zeichnung nicht verbunden sind, versteht sich, dass in der praktischen Realisierung selbstverständlich geeignete Signal- und Spannungsversorgungsleitungen usw. zu den Einheiten 22 und 23 in der Einheit 18 geführt sind.

Im internen Speicher 23 befindet sich nun ein Ringspeicher, in welchen die Daten des von den A/D-Wandlern erzeugten Datenstroms abgespeichert werden, während die Auswerteeinheit auf ein Lichtstrahlereignis wartet. Die älteren Werte werden dabei sukzessive überschrieben.

Die Abtastrate 20 der A/D-Wandler 11 wird im Hinblick auf das Nyquist-Theorem so gewählt, dass sie mindestens zweimal schneller als die maximale Bandbreite der Signale 6 ist. Die Länge des Ringpuffers wird so gewählt, dass auch noch sehr langsame Ereignisse bei Empfang in kurzem Abstand weitestgehend komplett im Ringspeicher abgelegt werden.

Die Anordnung ist nun dazu ausgelegt, dass das Triggersignal 13 das Beschreiben des Ringpuffers nach einer vordefinierten Zeit stoppt, die etwas kürzer ist als die Zeit, die benötigt wird, um den Ringpuffer einmal vollzuschreiben. Somit können auch Einschwingvorgänge vor dem Eintreten des Triggersignals noch erfasst werden, sowie der komplette Verlauf der Signale 6 während eines Lichtimpulses.

Aus dem Verlauf der gespeicherten Daten kann die Auswerteeinheit dann digitale Werte berechnen, deren Verhältnis weitgehend dem Verhältnis der Signalamplituden des Lichtstrahlempfangs auf den Detektorelementen 3 entspricht. Daraus kann in der Auswerteeinheit dann auf den Auftreffpunkt geschlossen werden, an dem der Strahl auf die Anordnung 24 der Detektorelemente auftrifft, so dass dem Benutzer eine Höheninformation über die Anzeige 15, wahlweise auch über Lautsprecher, vgl. 17, gegeben werden kann.

Der vorbekannte Handmessempfänger ist somit ohne weiteres geeignet, gepulste Lichtstrahlen, die rotieren, zu Vermessungszwecken, insbesondere Höhenvermessungszwecken zu erfassen.

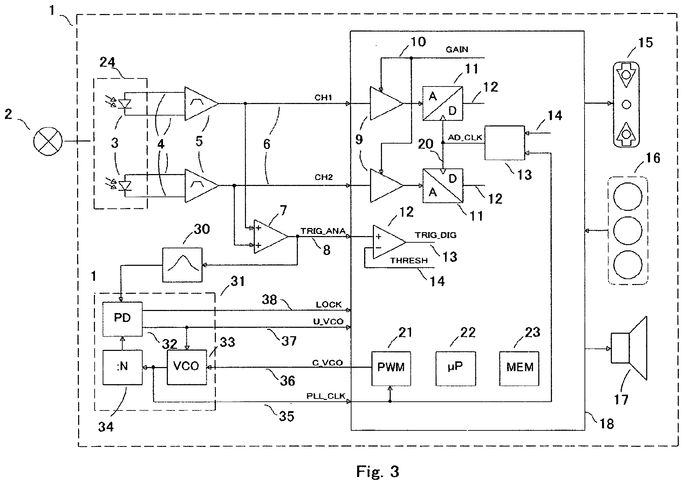

Es soll nun dargestellt werden, wie mit geringen Mitteln die in Fig. 2 gezeigte Anordnung abgeändert werden kann, um auch modulierte Signale zu erfassen. Dazu wird nachfolgend Fig. 3 herangezogen. In dieser sind viele Teile identisch und damit auch funktionsidentisch zu der Ausbildung von Fig. 2 enthalten, aber es ist auch die erfindungsgemäße Ergänzung vorhanden.

Wiederum besteht, auch nach Fig. 3, ein Lichtstrahlempfänger 1 zum Empfang von rotierenden, unmodulierten Lichtstrahlen aus einer Anordnung 24 von zwei lichtempfindlichen Detektorelementen, die bei Lichtstrahlempfang elektrische Ausgangssignale 4 erzeugen, die von jeweils zwei Verstärkungs- und Signalkonditionierungsstufen 5 weiterverarbeitet werden. Die Ausgangssignale 6 der Verstärkungs - und Signalkonditionierungsstufen werden der Auswerteeinheit 18 zugeführt.

Um diese Signale 6 weiter zu verstärken, sind in der Auswerteeinheit 18 zwei programmierbare Verstärker 9 vor den A/D-Wandlern 11 vorgesehen, deren Verstärkung 10 per Software einstellbar ist. Für Rotationslaserempfang reicht es aber aus, diese auf eine Verstärkung von 1 zu programmieren, bzw. abzuschalten; in diesem Falle gelangen die Signale 9 direkt an die A/D-Wandler-Eingänge.

Um einen eintreffenden Lichtimpuls des rotierenden Laserstrahls zu erkennen, werden die Signale 6 in einem summierenden Verstärker und Signalkonditionierer 7 weiter aufbereitet und das analoge Triggersignal 8 dem in der Auswerteeinheit 18 enthaltenen Signalvergleicher zugeführt. Der Signalvergleicher vergleicht das analoge Triggersignal 8 mit fest eingestellten oder per Software programmierbarer Schwellwertspannung 14. Das digitale Ergebnis dieses Vergleichs, das digitale Triggersignal 13, steht nun zur Steuerung des Abtastvorgangs und der Speicherung in den internen Speicher 23 bereit.

Während die Auswerteeinheit auf ein Lichtstrahlereignis wartet, werden die Daten des von den A/D Wandlern erzeugten Datenstroms in je einem Ringspeicher, der sich im internen Speicher 23 befindet gespeichert, und ältere Werte werden sukzessive überschrieben. Die Abtastrate 20 der A/D-Wandler wird so gewählt, dass sie mindestens zweimal schneller als die maximale Bandbreite der Signale 6 ist. Die Länge des Ringpuffers wird so gestaltet, dass auch noch sehr langsame Ereignisse (bei Empfang in kurzem Abstand) weitestgehend komplett im Ringpuffer abgelegt werden.

Das Triggersignal 13 stoppt das Beschreiben des Ringpuffers nach einer vordefinierten Zeit, die etwas kürzer als die Zeit ausgelegt ist, die es braucht, um den Ringpuffer einmal vollzuschreiben. Somit können Einschwingvorgänge vor dem Eintreten des Triggersignals gerade noch erfasst werden, sowie der komplette Verlauf der Signale 6 während eines Lichtimpulses.

Aus dem Verlauf der gespeicherten Daten kann die Auswerteeinheit nun separate digitale Werte berechnen, deren Verhältnis weitgehend dem Verhältnis der Signalamplituden des Lichtstrahlempfangs auf den Detektorelementen 3 entspricht. Daraus kann die Auswerteeinheit dann auf den Auftreffpunkt des Strahles auf die Anordnung 24 der Detektorelemente schließen und dem Benutzer eine Höheninformation über die Anzeige 15 oder den Lautsprecher 17 geben.

Werte, die aus dem oder den Ringspeichern abgeleitet werden können, sind z.B. ein Integralwert des Peak-Ereignisses, dessen Spitzenwert oder andere Werte wie Peakbreite, Peaksymme-trie und zeitlicher Schwerpunkt. All diese Werte können dafür herangezogen werden, um Nutzsignale von Störsignalen zu unterscheiden, weitere Positionsinformationen wie Winkel und Distanzen über den zeitlichen Verlauf abzuleiten usw.

Erfindungsgemäß sind nun für den Betriebsmodus mit modulierten Lichtstrahlquellen wie z.B. Linienlasern weitere Einheiten hinzugefügt. So ist zunächst vorgesehen ein -allerdings nicht erfindungszwingend erforderliches- hochverstärkendes Bandpassfilter 30, das von dem analogen Triggersignal 8 gespeist wird, wobei sich der Bandpassfillerübertragungsbereich über mindestens einen Frequenzbereich erstreckt, nämlich jenen Frequenzbereich, in dem die erwarteten Modulationsfrequenzen der zu empfangenden modulierten Lasersender 2 liegen. Der Bandpassfilter dient dazu, das Signal soweit hoch zu verstärken, dass die nachgeschaltete PLL 31 auch noch bei großen Entfernungen die Triggerfrequenz empfangen kann, andererseits aber keine Übersteuerung durch sehr stark hochverstärktes Grundrauschen und andere Störsignale auftritt.

Die PLL 31 besteht wiederum aus einem Phasendetektor 32, einem spannungsgesteuerten Oszillator (VCO) 33 und einem Frequenzteiler 34 mit einem bestimmten Teilerverhältnis. Der VCO 33 kann aber selbst auch einen Frequenzteiler enthalten.

Fällt nun ein hinreichend starker, modulierter Lichtstrahl auf die Detektorelemente, so fängt die PLL die Trägerfrequenz und gibt ein Vielfaches davon als Ausgangstakt 35 aus. Ist die Trägerwelle stark genug, wird dies durch ein Lock-Signal 38 angezeigt. Die Steuerspannung 37 des VCO kann ebenfalls der Auswerteeinheit zur Nachführung der Mittenfrequenz übergeben werden. Eine Nachführung oder Einstellung der Mittenfrequenz kann über ein Steuersignal 36 erfolgen. Es ist im Übrigen per se möglich und darüber hinaus auch bevorzugt, wenn die Frequenz während des Lock-In-zustandes gemessen und die Mittenfrequenz darauf nachgeführt wird.

Um nun die Signalamplituden der modulierten Signale detektieren zu können, werden die A/D-Wandler mit Hilfe des PLL-Ausgangstaktes 35 getaktet. In dieser Betriebsart liegt also ein Vielfaches der Modulationsfrequenz als Takt für die A/D-Wandlungen an, mit dem Ergebnis, dass im digitalen Datenstrom 12 nun für jeden Zyklus der Modulationsfrequenz eine bestimmte Anzahl von Werten, z.B. vier Werte erfasst werden.

Die Auswerteeinheit kann nun durch massive Mittelung der Daten vieler Zyklen die Signalamplituden der Signale 6 mit einer Auflösung bestimmen, die einem Vielfachen der Auflösung der verwendeten A/D-Wandler entspricht. Der zusätzliche Zuwachs an Auflösung liegt typisch bei über sechs Bits, so dass bei Verwendung von zwölf-bit A/D-Wandlern eine effektive Auflösung des damit realisierten synchronen Detektors von mehr als achtzehn Bit zu erwarten ist Damit ist unter normalen Bedingungen die digital detektierte Amplitude nur noch vom Detektorrauschen dominiert.

Dies ist als ein besonderer Vorteil der hier vorgestellten digitalen synchronen Detektion gegenüber dem Stand der Technik zu sehen, da mittels der sehr hohen Auflösungen auch hochgenaue lineare Höhenmessungen, wie sie z. B. in der US 7,110,092 beschrieben werden, jetzt auch mit modulierten Linienlasern möglich sind.

Durch Veränderung der Verstärkung der vor die A/D-Wandler geschalteten Verstärkerstufen 9 mit programmierbarer Verstärkung 10 könnte der Dynamikbereich noch weiter vergrößert werden. Die Anpassung kann für die beiden Betriebsarten aber auch lediglich darin bestehen, dass für jede Betriebsart eine jeweils feste Verstärkung passend zur jeweiligen Betriebsart gewählt wird.

Im Falle eines RC-Oszillators als VCO kann z.B. die frequenzbestimmende Kapazität C durch eine hinzugeschaltete Kapazitätsdiode mittels Signal 36 verstimmt werden. Diese Möglichkeit besteht zwar, ist aber nicht besonders vorteilhaft, da sie relativ stark von der Temperatur abhängig ist.

Es sei daher erwähnt, dass es eine deutlich bessere Methode der Abstimmung der Mittenfrequenz der PLL und des VCO gibt, die keinen wesentlich höheren Schahungsaufwand erfordert. Diese elegantere Methode der Abstimmung der Mittenfrequenz sieht vor, den PLL-Ausgangstakt 35 dazu zu verwenden, um einen in die Auswerteeinheit integrierten PWM-Timer zu synchronisieren, der über ein auf den PLL-Ausgangstakt synchronisiertes PWM-Signal eine weitere Kapazität zur frequenzbestimmenden Grundkapazität hinzu- und/oder wegschaltet. Der Timer der PWM läuft dabei auf einem viel höheren Takt als die PLL, möglichst dem höchsten in der Auswerteeinheit verfügbaren Haupttakt.

Der Timer wird parallel zu Flankenwechseln des PLL-Ausgangs-taktes 35 zurückgesetzt und damit auf diese synchronisiert.

Das Schaltelement kann ein auf Masse schaltender MOSFET sein; im einfachsten Fall ist es ein auf Masse bezogener Ausgangstreiber einer im Open-Drain-Betrieb laufenden Ausgangstufe des Ausgangspins der Auswerteeinheit, auf die die PWM geschaltet ist.

Verändert man nun das Tastverhältnis des synchronisierten PWM-Signals über die Verstellung der digitalen PWM-Schwelle, so kann man die Mittenfrequenz der PLL oder des VCO damit hochpräzise und in weiten Bereichen digital verstellen.

Wenn, was typisch ist, in der Auswerteeinheit ohnehin ein Timer mit Open-Drain oder Open-Source PWM-Ausgängen vorhanden ist, benötigt man lediglich einen zusätzlichen Kondensator, um die Mittenfrequenz der PLL einstellbar zu machen.

Da nun die Mittenfrequenz der PLL insbesondere per Software verstellbar ist, ist der Fangbereich nicht mehr identisch mit dem gesamten erfassbaren Frequenzbereich und kann somit unabhängig von diesem optimiert werden.

Das Ergebnis ist ein Empfangsmodus für modulierte Linienlaser, der mit einer Vielzahl unterschiedlicher Zentralstationen verwendbar ist, weil er deren Modulationsfrequenz durch Anlernen abdecken kann, gleichzeitig aberschmalbandig genug detektiert, um höchste Messgenauigkeiten, Reichweiten und Störfestigkeiten zu erzielen. Es sei darauf hingewiesen, dass die Anlemprozesse derart schnell und unmerklich ausgeführt werden können, dass der Benutzer diese nicht als solche zur Kenntnis nehmen oder gar veranlassen muss.

Durch die zugleich leicht realisierbaren Funktionalitäten für den Betriebsmodus mit unmodulierten, rotierenden Lichtstrahlen, wie z.B. mit Rotationslasern, wird damit ein Lichtempfänger erhalten, der mit einer Vielzahl von Geräten am Markt kompatibel ist, sehr geringe Gestehungskosten aufweist und in allen Betriebsarten einen ergonomischen und genauen Betrieb ermöglicht,

Das hier beschriebene Lichtemptängerkonzept ist im Übrigen nicht beschränkt auf Rotationslaser und Modulation aufweisende Linienlaser. Es können ebenfalls langsam bewegliche modulierte Lichtstrahlfächer, wie sie z.B. bei motorisierten Tachymetern vorkommen, oder langsam bewegte oder unbewegte modulierte Zielstrahlen von Punktlasern an Tachymetern, Tunnelbaulasern oder Kanalbaulasern empfangen werden. Auch sind die Empfänger für viele Anwendungen außerhalb des Baubereichs, wie z.B. Lichtgitter, Lichtschranken usw. verwendbar.

## Patentansprüche

1. Empfangseinheit (1) für lichtbasierte (Ver-)Messungen mit einem Analog-Digital-Wandler (11) zur getakteten Analog-zu-Digital- Wandlung von Lichtdetektionssignalen und einem Taktungsmittel zur Taktung des Datenstromes vom Analog-Digital-Wandler,
**dadurch gekennzeichnet, dass**
für den Empfang von modulierten Lichtsignalen das Taktungsmittel eine phasenstarre Schleife (31) mit einem Eingang für entsprechend der Lichtsignalmodulation modulierte Signale und mit einem Ausgang zur Ausgabe eines Frequenzvielfachen der detektierten Modulationsfrequenz für die Taktung des Datenstromes des Analog-Digital-Wandlers aufweist.

2. Empfangseinheit (1) nach dem vorhergehenden Anspruch, zur Analyse eines Lichtstrahlempfangs, mit einer Lichtstrahldetektoranordnung, die aus mindestens einem Lichtstrahldetektorelement und einer Auswerteeinheit besteht, bei der mindestens ein Analog-/Digitalwandler (11) vorgesehen ist, **dadurch gekennzeichnet, dass** der Analog-/Digitalwandler (11) mit einem Ausgangstakt einer PLL (31) getaktet ist, deren Frequenz ein Vielfaches einer in den Fangbereich der PLL (31) fallenden Trägerfrequenz eines modulierten Lichtstrahlempfangs ist, und dass der am Ausgang des Analog-/Digitalwandlers (11) entstehende digitale Datenstrom zwecks Bestimmung einer Amplitude digital detektiert wird.

3. Empfangseinheit (1) nach einem der vorhergehenden Ansprüche, **dadurch gekennzeichnet, dass** die Mittenfrequenz des Fangbereichs der PLL (31) über ein Steuersignal eingestellt werden kann, insbesondere von der oder einer Auswerteeinheit.

4. Empfangseinheit (1) nach dem vorhergehenden Anspruch, **dadurch gekennzeichnet, dass** in einer Auswerteeinheit ein Timer mit einem Ausgang zur Pulsweitenmodulation vorgesehen ist, der über den Ausgangstakt der PLL (31) synchronisiert wird.

5. Empfangseinheit (1) nach dem vorhergehenden Anspruch, **dadurch gekennzeichnet, dass** die Mittenfrequenz des Fangbereiches der PLL (31) durch das pulsweitenmodulierte Ausgangssignal des Timers gesteuert wird.

6. Empfangseinheit (1) nach einem der vorhergehenden Ansprüche, **dadurch gekennzeichnet, dass** diese für den Empfang eines nicht modulierten, rotierend bewegten Lichtstrahls ausgebildet ist.

7. Empfangseinheit (1) nach einem der vorhergehenden Ansprüche, **dadurch gekennzeichnet, dass** diese für den Empfang eines modulierten nicht rotierend bewegten Lichtstrahls ausgebildet ist.

8. Empfangseinheit (1) nach den beiden vorherigen Ansprüchen, **dadurch gekennzeichnet, dass** eine Umschaltung zwischen zwei Betriebsmodi für modulierte oder nicht modulierte Lichtstrahlen vorgesehen ist.

9. Empfangseinheit (1) nach den beiden vorherigen Ansprüchen, **dadurch gekennzeichnet, dass** eine Betriebsart für die manuelle oder automatische Anlernung der Mittenfrequenz des Fangbereichs der PLL an die Trägerfrequenz eines Lichtsenders, vom dem Lichtstrahlen empfangen werden sollen, vorgesehen ist.

10. Empfangseinheit (1) nach einem der vorhergehenden Ansprüche, **dadurch gekennzeichnet, dass** sie zur Nachführung der Mittenfrequenz des Fangbereichs bei gelockter phasenstarrer Schleife ausgebildet ist.

## Claims

1. Receiving unit (1) for light-based (surveying) measurements, having an analogue/digital converter (11) for the clocked analogue-to-digital conversion of light detection signals and a clocking means for clocking the data stream from the analogue/digital converter,
**characterized in that**
for the reception of modulated light signals, the clocking means has a phase-locked loop (31) with an input for signals modulated according to the light signal modulation and with an output for outputting a frequency multiple of the detected modulation frequency for the purpose of clocking the data stream from the analogue/digital converter.

2. Receiving unit (1) according to the preceding claim, which for the analysis of light beam reception, having a light beam detector arrangement comprising at least one light beam detector element and an evaluation unit, in which at least one analogue/digital converter (11) is provided, **characterized in that** the analogue/digital converter (11) is clocked with an output clock from a PLL (31), the frequency of which is a multiple of a carrier frequency of modulated light beam reception falling in the capture range of the PLL (31), and **in that** the digital data stream produced at the output of the analogue/digital converter (11) is digitally detected for the purpose of determining an amplitude.

3. Receiving unit (1) according to one of the preceding claims, **characterized in that** the centre frequency of the capture range of the PLL (31) can be set using a control signal, in particular from the or an evaluation unit.

4. Receiving unit (1) according to the preceding claim, **characterized in that** a timer with an output for pulse width modulation, which is synchronized via the output clock of the PLL (31), is provided in an evaluation unit.

5. Receiving unit (1) according to the preceding claim, **characterized in that** the centre frequency of the capture range of the PLL (31) is controlled by the pulse-width-modulated output signal from the timer.

6. Receiving unit (1) according to one of the preceding claims, **characterized in that** it is designed to receive an unmodulated light beam moving in rotation.

7. Receiving unit (1) according to one of the preceding claims, **characterized in that** it is designed to receive a modulated light beam not moving in rotation.

8. Receiving unit (1) according to the two preceding claims, **characterized in that** a changeover between two operating modes for modulated or unmodulated light beams is provided.

9. Receiving unit (1) according to the two preceding claims, **characterized in that** an operating mode is provided for manually or automatically training the centre frequency of the capture range of the PLL to the carrier frequency of a light transmitter, from which light beams are intended to be received.

10. Receiving unit (1) according to one of the preceding claims, **characterized in that** it is designed to track the centre frequency of the capture range in the case of a locked phase-locked loop.

## Revendications

1. Unité de réception (1) pour des mesur(ag)es à base de lumière avec un convertisseur analogique-numérique (11) pour la conversion analogique-numérique synchronisée de signaux de détection de lumière et un moyen de synchronisation pour la synchronisation du flux de données provenant du convertisseur analogique-numérique, **caractérisée en ce que** pour la réception de signaux lumineux modulés le moyen de synchronisation présente une boucle à verrouillage de phase (31) avec une entrée pour des signaux modulés selon la modulation du signal lumineux et avec une sortie pour l'émission d'un multiple de fréquence de la fréquence de modulation détectée pour la synchronisation du flux de données du convertisseur analogique-numérique.

2. Unité de réception (1) selon la revendication précédente, qui pour l'analyse d'une réception de rayon lumineux avec un ensemble de détecteur de rayon lumineux, qui se compose d'au moins un élément de détecteur de rayon lumineux et d'une unité d'évaluation, dans laquelle il est prévu au moins un convertisseur analogique-numérique (11), **caractérisée en ce que** le convertisseur analogique-numérique (11) est synchronisé avec une cadence de sortie d'un PLL (31), dont la fréquence est un multiple d'une fréquence porteuse d'une réception de signal lumineux modulée tombant dans la plage de capture du PLL (31) et **en ce que** le flux de données numériques apparaissant à la sortie du convertisseur analogique-numérique (11) est détecté numériquement en vue de la détermination d'une amplitude.

3. Unité de réception (1) selon l'une quelconque des revendications précédentes, **caractérisée en ce que** la fréquence centrale de la plage de capture du PLL (31) peut être réglée au moyen d'un signal de commande, en particulier par la ou une unité d'évaluation.

4. Unité de réception (1) selon la revendication précédente, **caractérisée en ce qu'**il est prévu dans une unité d'évaluation une minuterie avec une sortie pour la modulation en largeur d'impulsion, qui est synchronisée par la cadence de sortie du PLL (31).

5. Unité de réception (1) selon la revendication précédente, **caractérisée en ce que** la fréquence centrale de la plage de capture du PLL (31) est commandée par le signal de sortie modulé en largeur d'impulsion de la minuterie.

6. Unité de réception (1) selon l'une quelconque des revendications précédentes, **caractérisée en ce qu'**elle est configurée en vue de la réception d'un signal lumineux non modulé déplacé en rotation.

7. Unité de réception (1) selon l'une quelconque des revendications précédentes, **caractérisée en ce qu'**elle est configurée en vue de la réception d'un signal lumineux modulé non déplacé en rotation.

8. Unité de réception (1) selon les deux revendications précédentes, **caractérisée en ce qu'**il est prévu une commutation entre deux modes de fonctionnement pour des signaux lumineux modulés ou non modulés.

9. Unité de réception (1) selon les deux revendications précédentes, **caractérisée en ce qu'**il est prévu un mode de fonctionnement pour l'apprentissage manuel ou automatique de la fréquence centrale de la plage de capture du PLL à la fréquence porteuse d'un émetteur de lumière, à partir duquel des signaux lumineux doivent être reçus.

10. Unité de réception (1) selon l'une quelconque des revendications précédentes, **caractérisée en ce qu'**elle est configurée en vue de l'asservissement de la fréquence centrale de la plage de capture pour une boucle à verrouillage de phase.
